# EUROPEAN PATENT SPECIFICATION

(11) **EP 3 581 816 B1**
(45) Date of publication and mention of the grant of the patent: **15.09.2021**
(21) Application number: 19179211.8
(22) Date of filing: 10.06.2019
(51) Int. Cl.: F16C 3/02, F16C 23/04, F16C 27/02, F16C 27/06, F16D 3/38

(54) **A HOLDER FOR MULTI-PART PROPSHAFT**
HALTER FÜR MEHRTEILIGE ANTRIEBSWELLE
SUPPORT POUR ARBRE DE TRANSMISSION EN PLUSIEURS PARTIES

(30) Priority: 12.06.2018 TR 201808427
(43) Date of publication of application: 18.12.2019
(73) Proprietor: Tirsan Kardan Sanayi Ve Ticaret Anonim Sirketi, Yunusemre - Manisa (TR)
(72) Inventor: KORUK, ADNAN, 45030 Manisa (TR)
(74) Representative: Yamankaradeniz, Kemal

(56) References cited:
- US-A1- 2017 174 077

## Description

### TECHNICAL FIELD

The invention is related to the propshaft center bearing assembly used for assembly of a multi-part propshaft, formed by connecting minimum two driveshafts, to the vehicle from the middle.

The invention, with its structure allowing angled assembly of the ball and the rubber part inside the complete center bearing plate which fastens the multi-part propshaft to the vehicle, is about the inclined propshaft center bearing assembly which minimizes possible joint angles on propshaft joints and thus extends operating lives of propshafts.

### PRIOR ART

The center bearing assembly which assembles the two-part propshaft to the vehicle consists of center bearing assembly including ball bearing member, midship stud and midship yoke. Current invention is about propshaft holder members. The holder member consists of an complete center bearing plate, ball bearing and rubber. The complete center bearing plate building up the external part of the system, connects the two-part propshaft assembly from its joint to the chassis at the lower part of the vehicle. The ball positioned inside the complete center bearing plate with a bearing in its center, allows the propshaft to rotate smoothly. The ball is placed inside a rubber cushion. Rubber cushion absorbs vibrations, prevents noise and avoids its transmission to the chassis.

In the prior art, application numbered US2017174077 relates to a carrying bearing mechanism developed for use in land vehicles (UTV). A carrier bearing assembly includes a bracket extending between two ends and having a certain thickness, an opening formed on said bracket, a bearing friction part fitting the opening on the bracket, a rubber bushing located between the bracket and the bearing and more than one bolt. The invention disclosed under US2017174077 aims to reduce unequal operating angles at joints of the components forming the assembly and thus bring the rotation speeds of transmission organ components to same level. Thus, it is stated that undesired vibrations, extra stress at joints and component faults can be prevented, rotation at same linear and angular speed is enabled. Carrier bearing assembly in US2017174077 is on horizontal axis where carrier moves, however in said document there are not a rubber cushion and a ball bearing are mounted in a manner to comprise an assembly angle to bracket metal body part on the vertical axis.

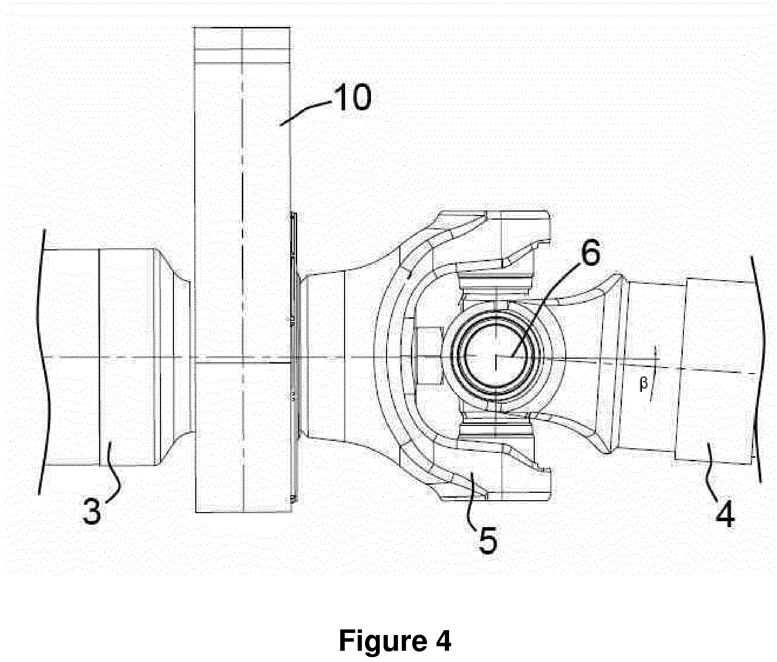

Side profile view of the previous technical holder (10) group is given in Figure 4. In recognized state of the technique current propshaft center bearing assembly (10) assembly is manufactured without taking possible joint angles at propshaft joints into consideration. It is connected to the vehicle considering horizontal and vertical minimum angle shifts. The complete center bearing plate and rubber part, which form the propshaft center bearing assembly (10), are assembled inside each other without angle. The rear axle after the medium part which contains the center bearing assembly is met by the joint angle (**β**) on differential side formed by the joints here. The increase of the joint angle (**β**) has negative impact on operating life and comfort characteristics (vibration, noise) of the propshaft.

In the patent literature, application number US7534048B2 is available related to the subject. The holder structure defined in the abstract of this application, intends to support a shaft according to a support surface in variable angles by rotating.

As a result, new structures are required in multi-part propshaft propshaft center bearing assembly to remove above mentioned disadvantages and deliver solutions to new systems.

### OBJECT OF THE INVENTION

The current invention is about an propshaft center bearing assembly which meets above defined requirements, removes all disadvantages and brings some additional advantages.

Main goal of the invention is to minimize the joint angle in the middle joint group of multi-part propshaft by mounting the rubber part and the ball bearing to metal body of the bracket with a certain assembly angle on the vertical axis.

Another goal of the invention is to prevent stress and vibrations on the propshaft during operation and concordantly to decrease noise by minimizing the joint angle on the middle universal joint of the multi-part propshaft.

The current invention is about an propshaft center bearing assembly with a ball and a rubber part around the mentioned ball, used for assembly of a multi-part propshaft, formed by connecting minimum two driveshafts, to the vehicle from the middle, in order to execute above mentioned and below detailed advantages. The invention characterized by comprising minimum one complete center bearing plate bearing the mentioned ball and the rubber part inside in a manner to comprise an assembly angle on the vertical axis in order to minimize the joint angle on the propshaft assembly.

The structural features and characteristics of the invention as well as all its advantages might be better understood with below given figures and the detailed explanation referring to these figures; therefore, evaluation should be performed considering these figures and detailed explanations.

### BRIEF DESCRIPTION OF FIGURES

The current invention should be best evaluated together with below explained figures in order to understand its structure and advantages including additional members.
- **Figure 1**: ; The side profile view of the inclined propshaft center bearing assembly, which is the subject of the invention.
- **Figure 2**: ; The side profile detail view of the inclined propshaft center bearing assembly from the assembled section, which is the subject of the invention.

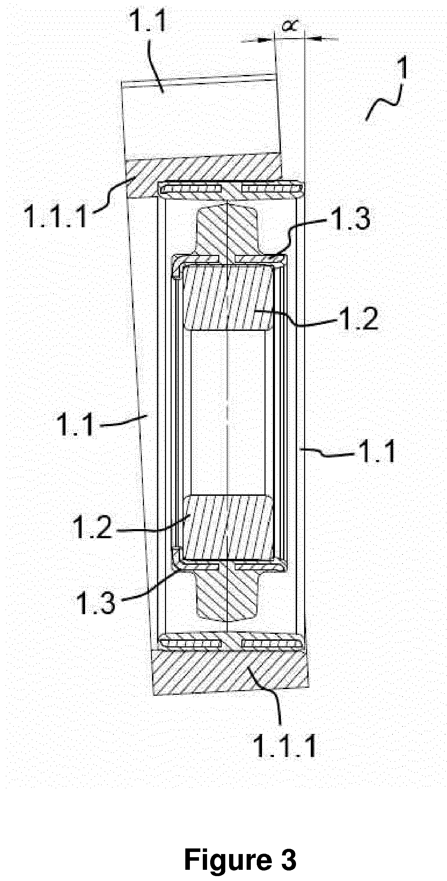

- **Figure 3**: ; The side profile section view of the inclined propshaft center bearing assembly, which is the subject of the invention.
- **Figure 4**: ; The side profile view of the previous technology propshaft center bearing assembly, on multi-part propshaft structure.

### REFERENCE NUMBERS

- **1.**: Propshaft Center Bearing Assembly
- **1.1.**: Complete Center Bearing Plate
- **1.1.1.**: Inclined Housing
- **1.2.**: Ball Bearing
- **1.3.**: Rubber Cushion
- **2.**: Multi-Part Propshaft
- **3.**: Propshaft 1
- **4.**: Propshaft 2
- **5.**: Midship yoke
- **6.**: Universal joint
- **10.**: Prior Art Center Bearing Assembly

- **α**: : Assembly Angle
- **β**: : Joint Angle

### DETAILED DESCRIPTION OF THE INVENTION

In this detailed explanation, preferred construction of the inclined propshaft center bearing assembly (1), which is the subject of the invention, is explained to better understand the subject in a manner not constituting any limiting impact.

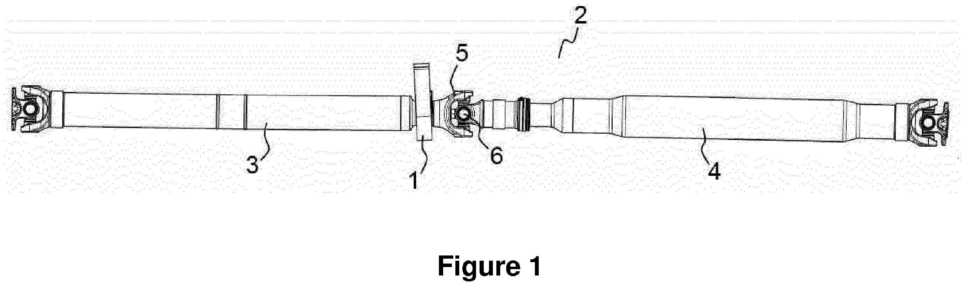

The invention is related to the inclined propshaft center bearing assembly (1) used for assembly of a multi-part propshaft (2), formed by connecting minimum two propshafts, to the vehicle from the middle. Figure 1, shows side profile view of the inclined propshaft center bearing assembly (1), which is the subject of the invention, on multi-part propshaft (2) structure. As you can see in Figure 1, the propshaft center bearing assembly (1) is mounted on the neck of an midship yoke (5) in the middle of the multi-part propshaft consisting of combination of propshaft 1 (3) and propshaft 2 (4). Propshaft 1 (3) and propshaft 2 (4) are connected to each other with a universal joint (6).

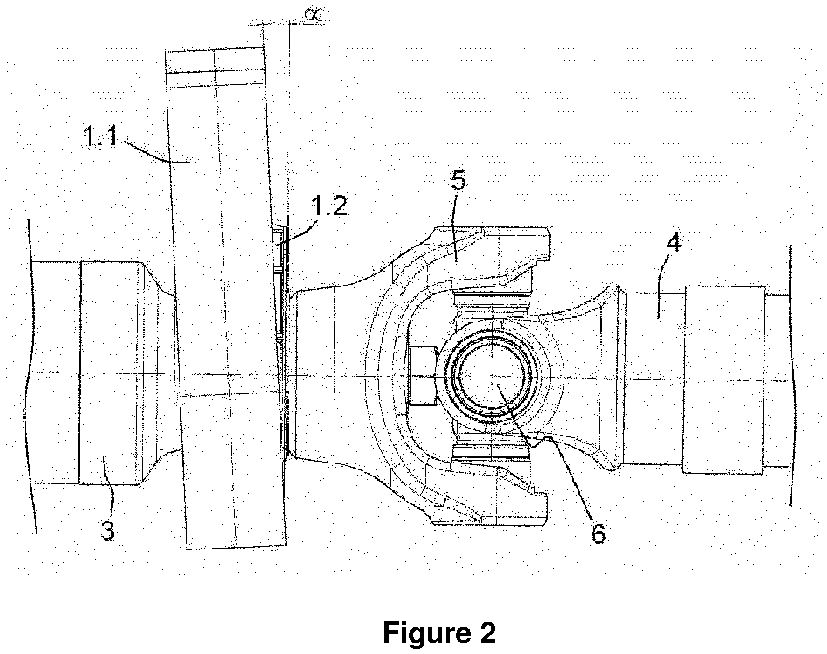

Figure 2 shows side profile detail view of the inclined propshaft center bearing assembly (1) from the assembled section, which is the subject of the invention. Accordingly, the members forming the inclined propshaft center bearing assembly (1) consist of an complete center bearing plate (1.1) mounting the system to the vehicle chassis, a bearing rubber part (1.3) inside the mentioned complete center bearing plate (1.1), and a ball bearing (1.2). A bearing is mounted in the middle of the ball bearing (1.2), and the ball bearing (1.2) holds the neck part of the midship yoke (5). The rubber part (1.3) placed between the ball bearing (1.2) and the complete center bearing plate (1.1) absorbs vibrations during operation and thus prevents vibrations to make noise between multi-part propshaft (2) assembly and the chassis.

The innovation revealed on the propshaft center bearing assembly (1), which is the subject of the invention, is that the complete center bearing plate (1.1) has an assembly angle (α) corresponding to a certain inclination on the vertical axis and thus the rubber part (1.3) and the ball bearing (1.2) can be mounted inside with an angle. Therefore, there is an inclined housing (1.1.1) inside the complete center bearing plate (1.1) which holds the rubber part (1.3) and the ball bearing (1.2). The layout of slightly tilted complete center bearing plate (1.1), and the rubber part (1.3) inside the complete center bearing plate (1.1), which has the same angle as the assembly angle (α) with the complete center bearing plate, and the ball bearing (1.2) will be better understood from the side profile section of the inclined propshaft center bearing assembly (1), which is the subject of the invention.

The mentioned assembly angle is between (**α**) 1°-9°.

The operation principle of the inclined propshaft center bearing assembly, which is the subject of the invention is defined below:
As you can see in Figure 1, the neck part of the midship yoke (5) of the multi-part propshaft (2) holds the ball bearing (1.2) of the inclined propshaft center bearing assembly, which is the subject of the invention. Propshaft center bearing assembly (1) is mounted to the lower part of the vehicle chassis from its upper part When the engine starts, the power generated in the engine is transmitted to the differential with a rotary motion, and a joint angle (**β**) is formed between propshaft 1 (3) and propshaft 2 (4) on the multi-part propshaft on the horizontal axis like in Figure 4. Therefore, a certain downwards inclination is formed after the universal joint (6) between propshaft 1 (3) and propshaft 2 (4) connected to each other with a universal joint (6). The joint angle (**β**) formed due to this inclination is minimized by the assembly angle (**α**) on the vertical axis on the propshaft center bearing assembly, which is the subject of the invention. Through the inclined housing (1.1.1) inside the complete center bearing plate (1.1) body, the ball bearing (1.2) and the rubber cushion (1.3) are mounted in a manner to form an assembly angle (**α**) on the vertical axis. Therefore, the multi-part propshaft (2) held by the propshaft center bearing assembly (1) performs the rotary motion smoothly and vibrations are reduced. This extends the operating lives of both the multi-part propshaft (2) assembly and the propshaft center bearing assembly (1). When vibration decrease, the amount of noise also decreases. This improves comfort characteristics.

## Claims

1. Inclined propshaft center bearing assembly (1) mounted to the lower part of a vehicle chassis from its upper part with a ball bearing (1.2) and a rubber cushion (1.3) around the mentioned bearing ball (1.2), used for assembly of a multi-part propshaft (2), formed by connecting minimum two propshafts, to the vehicle from the middle wherein at least one complete center bearing plate (1.1) holding the mentioned ball bearing (1.2) and the rubber cushion(1.3) inside in a manner to comprise an assembly angle (**α**) on the vertical axis in order to minimize the joint angle (**β**) on the propshaft assembly.

2. A propshaft center bearing assembly (1) according to Claim 1, is **characterized by** comprising ; an inclined housing (1.1.1) enabling mounting of the ball bearing (1.2) and the rubber cushion (1.3) with a certain inclination inside the mentioned complete center bearing plate (1.1).

3. A propshaft center bearing assembly (1) according to Claim 1, is **characterized by** comprising; an assembly angle between (**α**) 1-9°.

## Patentansprüche

1. Geneigte Kardanwellenmittellagerbaugruppe (1), die an dem unteren Teil eines Fahrzeugchassis von dessen oberen Teil mit einem Kugellager (1.2) und einem Gummipuffer (1.3) um die erwähnte Lagerkugel (1.2) montiert wird und die zum Anbauen einer mehrteiligen Kardanwelle (2), die durch das Verbinden von mindestens zwei Kardanwellen gebildet wird, von der Mitte an dem Fahrzeug verwendet wird, wobei mindestens eine komplette Mittellagerplatte (1.1) das erwähnte Kugellager (1.2) und den Gummipuffer (1.3) innen in einer Weise hält, um einen Anbauwinkel (α) auf der Vertikalachse zu umfassen, um den Gelenkwinkel (β) an der Kardanwellenbaugruppe zu minimieren.

2. Kardanwellenmittellagerbaugruppe (1) nach Anspruch 1, **dadurch gekennzeichnet, dass** sie Folgendes umfasst; ein geneigtes Gehäuse (1.1.1), das eine Montage des Kugellagers (1.2) und des Gummipuffers (1.3) mit einer gewissen Neigung innerhalb der erwähnten kompletten Mittellagerplatte (1.1) ermöglicht.

3. Kardanwellenmittellagerbaugruppe (1) nach Anspruch 1, **dadurch gekennzeichnet, dass** sie Folgendes umfasst; einen Anbauwinkel zwischen (α) 1°-9°.

## Revendications

1. Ensemble de palier intermédiaire d'arbre de transmission incliné (1) monté sur la partie inférieure d'un châssis de véhicule à partir de sa partie supérieure avec un roulement à billes (1.2) et un coussin en caoutchouc (1.3) autour du roulement à billes (1.2) mentionné, utilisé pour l'assemblage d'un arbre de transmission multi-composants (2), formé en reliant au moins deux arbres de transmission, au véhicule à partir du milieu dans lequel au moins un plateau de palier intermédiaire complet (1.1) supportant le roulement à billes (1.2) mentionné et le coussin en caoutchouc(1.3) à l'intérieur de telle manière à comporter un angle d'assemblage (α) sur l'axe vertical afin de minimiser l'angle de joint (β) sur l'arbre de transmission.

2. Ensemble de palier intermédiaire d'arbre de transmission (1) selon la revendication 1, **caractérisé en ce qu'**il comprend ; un boîtier incliné (1.1.1) permettant le montage du roulement à billes (1.2) et du coussin en caoutchouc (1.3) avec une certaine inclinaison à l'intérieur du plateau de palier intermédiaire complet (1.1) mentionné.

3. Ensemble de palier intermédiaire d'arbre de transmission (1) selon la revendication 1, **caractérisé en ce qu'**il comprend ; un angle d'assemblage compris entre (α) 1° et 9°.
